# EUROPÄISCHE PATENTSCHRIFT

(11) **EP 4 140 921 B1**
(45) Veröffentlichungstag und Bekanntmachung des Hinweises auf die Patenterteilung: **24.07.2024**
(21) Anmeldenummer: 21193891.5
(22) Anmeldetag: 30.08.2021
(51) Int. Cl.: B65G 27/04, B65G 27/24

(54) **VIBRATIONSFÖRDERER FÜR SCHÜTTGUT**
VIBRATION CONVEYOR FOR PIECE GOODS
TRANSPORTEUR PAR VIBRATION POUR MATIÈRES EN VRAC

(43) Veröffentlichungstag der Anmeldung: 01.03.2023
(73) Patentinhaber: Vibra Maschinenfabrik Schultheis GmbH & Co., 63075 Offenbach (DE)
(72) Erfinder: Schultheis, Winfried, 63075 Offenbach (DE)
(74) Vertreter: Beck & Rössig European Patent Attorneys

(56) Entgegenhaltungen:
- GB-A- 372 610
- RU-C1- 2 617 306
- US-A- 4 844 236
- US-A1- 2010 018 781
- US-B1- 6 216 850

## Beschreibung

Die Erfindung bezieht sich auf einen Vibrationsförderer für Schüttgut mit den Merkmalen des Oberbegriffs von Patentanspruch 1.

Ein solcher Vibrationsförderer für Schüttgut umfasst üblicherweise eine Förderrinne oder ein Förderrohr zur Aufnahme von Schüttgut, mindestens einen Vibrationsgenerator, der mit der Förderrinne oder dem Förderrohr wirkverbunden und derart konfiguriert ist, um eine gerichtete Schwingungserregung zum Fördern des Schüttguts in Längsrichtung durch die Förderrinne oder das Förderrohr zu erzeugen, wobei die gerichtete Schwingungserregung Richtungskomponenten in Längsrichtung der Förderrinne oder des Förderrohrs und vertikal entgegen der Schwerkraftrichtung aufweist, sowie mindestens ein in der Förderrinne oder dem Förderrohr angeordnetes Stauwehr zum Abbremsen der Förderbewegung des Schüttguts in Längsrichtung durch die Förderrinne oder das Förderrohr.

Vibrationsförderer dieser Bauart sind allgemein bekannt. Durch die Schwingungserregung werden die Partikel des Schüttguts nach dem Mikrowurfprinzip durch die Förderrinne oder das Förderrohr transportiert. Der Wurfwinkel wird hierbei durch die gerichtete Schwingungserregung bestimmt und resultiert aus der vektoriellen Addition der Richtungskomponenten in Längsrichtung und in Vertikalrichtung entgegen der Schwerkraftrichtung. Die einzelnen Partikel des Schüttguts werden durch die Schwingungserregung entsprechend dem Wurfwinkel beschleunigt, um anschließend herunterzufallen und erneut beschleunigt zu werden, wodurch Partikel in Längsrichtung durch die Förderrinne oder das Förderrohr wandern.

Zur reinen Förder- oder Dosierzwecken bleibt der Querschnitt der Förderrinne oder des Förderrohrs in der Regel unbeeinträchtigt. Das Schüttgut bewegt sich hierbei normalerweise mit einer Fördergeschwindigkeit im Bereich von etwa 3 - 20 m/min. Die Fördergeschwindigkeit hängt unter anderem von den Produkteigenschaften, dem Wurfwinkel, der Betriebsfrequenz und der Schwingbreite (Beschleunigung) ab.

Soll jedoch während des Transports des Schüttguts durch die Rinne eine Ver- oder Bearbeitung desselben erfolgen, ist die Verweilzeit in der Förderrinne oder dem Förderrohr oftmals zu gering. Aus diesem Grunde werden in das Förderrohr oder die Förderrinne Stauwehre eingebaut, welche die Fördergeschwindigkeit des Schüttguts in Längsrichtung herabsetzen. Das Schüttgut strömt dabei langsam über die Stauwehre hinweg. Die Auswirkung solcher Stauwehre auf den Transport und die Ver- oder Bearbeitung des Schüttguts ist jedoch nur schwer prognostizierbar. In ungünstigen Fällen kann es zu einem sehr inhomogenen Verweilzeitspektrum der Schüttgutpartikel in der Förderrinne oder dem Förderrohr kommen. Zudem steigt die Gefahr von Klumpenbildung und Blockaden. Außerdem können sich Verdichtungsbereiche und Totzonen im Förderstrom des Schüttguts bilden, welche sich erratisch auflösen und die Qualität des Schüttguts beeinträchtigen.

US 6,216,850 B1 offenbart einen Vibrationsförderer für Schüttgut mit den Merkmalen des Oberbegriffs von Patentanspruch 1. Der bekannte Vibrationsförderer umfasst einen zyklisch angetriebenen Antriebsmechanismus zum Bewegen von Produkt entlang eines länglichen Troges in einer Transportrichtung sowie weiterhin einen entlang des Bodens des Troges angeordneten Strömungsausgleicher zum Normalisieren des sich in Längsrichtung des Troges bewegenden Produktstroms. Der Strömungsausgleicher umfasst eine Vielzahl von länglichen Rampenelementen, die seitlich zwischen den Seitenwänden des Troges angeordnet sind. Produkt kann zwischen diesen Rampenelementen hindurchströmen, welche wie ein Rechen wirken und die Aufgabe haben, die Durchströmgeschwindigkeit von ungleichförmigen Snackartikeln zu vergleichmäßigen. Die geneigte Oberfläche der Rampe ist um 25° bis 45° abgewinkelt, wobei die bevorzugte Höhe der Rampe 2,5 Zoll über dem Boden in einem Trog mit einer vertikalen Höhe von typischerweise 6 Zoll beträgt. Das Problem der unzureichenden Verweildauer bleibt bestehen.

Weitere Förderer sind aus GB 372 610 A, US 2010/018781 A1, RU 2 617 306 C1 und US 4,844,236 A bekannt. Dort wird jeweils eine sägezahnartige Oberflächenstruktur auf dem Trogboden offenbart. Die Höhe der Zähne ist jedoch viel zu gering, um einen wesentlichen Einfluss auf die Verweilzeit des Produktes zu haben, damit es während des Durchtransports behandelt oder konditioniert werden kann, weshalb diese Oberflächenstruktur nicht als Stauwehr angesehen werden kann. Vielmehr sind die Sägezähne derart gestaltet, um bei einem ansteigenden Trog ein Zurückrutschen von Produkt zu verhindern, den Förderstrom jedoch in Förderrichtung bergauf möglichst nicht zu behindern.

Der Erfindung liegt die Aufgabe zugrunde, hier Abhilfe zu schaffen oder zumindest Verbesserungen zu erreichen. Insbesondere zielt die Erfindung darauf ab, Lösungen aufzuzeigen, welche es ermöglichen, bei Verwendung von Stauwehren eine möglichst homogene hohe Verweilzeit für das Schüttgut zu realisieren und Blockaden und Klumpenbildung zu vermeiden.

Diese Aufgabe wird durch einen Vibrationsförderer für Schüttgut mit den Merkmalen von Patentanspruch 1 gelöst. Dieser zeichnet sich durch eine besondere Geometrie des mindestens einen Stauwehrs aus. Das Stauerwehr weist eine in Förderrichtung des Schüttguts weisende Rückwand und eine entgegen der Förderrichtung weisende Vorderwand auf. Erfindungsgemäß ist die Rückwand des Stauwehrs in Längsrichtung der Förderrinne oder des Förderrohrs von einem Scheitel des Stauwehrs in Richtung zum Boden der Förderrinne oder des Förderrohrs hin zumindest abschnittsweise schräg abfallend geneigt.

Überraschenderweise werden hierdurch Verdichtungseffekte im Schüttgut weitestgehend vermieden, während gleichzeitig das Schüttgut mit homogeneren Verweilzeiten hinreichend in Förderrichtung weitertransportiert wird. Dabei können Verweilzeiten von bis zu etwa 30 min für die Partikel des Schüttguts erreicht werden. Dies gestattet es wiederum, das Schüttgut in dem Vibrationsförderer einem Be- oder Verarbeitungsprozess beispielsweise im Sinne einer Behandlung in einem Rührkessel zu unterwerfen, für welchen bei einer reinen Förder- oder Dosierfunktion des Vibrationsförderers ohne Stauwehre die Verweilzeit deutlich zu gering wäre.

Besondere Ausführungsarten der Erfindung sind Gegenstand weiterer Patentansprüche.

So kann beispielsweise eine schräge Neigung der Rückwand dadurch erzielt werden, dass diese mindestens einen ebenen schrägen Flächenabschnitt zur Kontaktierung des Schüttguts aufweist. Alternativ oder ergänzend kann die Rückwand mindestens einen konkav gewölbten Flächenabschnitt und/oder einen konvex gewölbten Flächenabschnitt aufweisen. Auch senkrechte Flächenabschnitte sind möglich. Ferner kann die Rückwand auch insgesamt als schräge Ebene oder insgesamt konvex oder konkav ausgestaltet sein. Hierdurch wird in Zusammenwirkung mit der gerichteten Schwingungserregung ein Schaufel-/Wurfeffekt erzielt, welcher einen zuverlässigen Transport der Partikel des Schüttguts mit homogenen Verweilzeiten weiter begünstigt.

Vorzugsweise erstreckt sich die Rückwand über die gesamte Breite der Förderrinne oder des Förderrohrs, so dass sämtliche Partikel im Schüttgut gezwungen werden, bei bestimmungsgemäßem Gebrauch im Lauf ihres Vorschubs durch die Förderrinne oder das Förderrohr den Scheitel des Stauwehrs zu überwinden und der vorstehend genannte Schaufel-/Wurfeffekt gut ausgenutzt wird. Für ein vollständiges Entleeren, beispielsweise zu Reinigungszwecken oder bei einem Produktwechsel, kann optional ein temporärer Bypass, vorzugsweise unter der Rückwand hindurch, für Restpartikel vorgesehen werden.

Gemäß einer besonderen Ausführungsart der Erfindung liegt das Verhältnis der Länge der Rückwand gemessen in Längsrichtung der Förderrinne oder des Förderrohrs vom Scheitel des Stauwehrs bis zum Auslauf am Boden der Förderrinne oder des Förderrohrs zur Höhe der Rückwand gemessen in Vertikalrichtung der Förderrinne oder des Förderrohrs vom Boden der Förderrinne oder des Förderrohrs bis zum Scheitel des Stauwehrs vorzugsweise im Bereich von 0,5 bis 2,0. Es hat sich gezeigt, dass hierdurch ein besonders homogenes Verweilzeitspektrum für die Partikel im Schüttgut erhalten wird.

Insbesondere kann die Länge der Rückwand gemessen in Längsrichtung der Förderrinne oder des Förderrohrs vom Scheitel des Stauwehrs bis zum Auslauf am Boden der Förderrinne oder des Förderrohrs kleiner sein als die Höhe der Rückwand gemessen in Vertikalrichtung der Förderrinne oder des Förderrohrs vom Boden der Förderrinne oder des Förderrohrs bis zum Scheitel des Stauwehrs.

Gemäß einer weiteren besonderen Ausführungsart der Erfindung verläuft die Vorderwand des Stauwehrs, welche dem Vorschub des Schüttguts entgegengerichtet ist, senkrecht zum Boden der Förderrinne oder des Förderrohrs und/oder in Schwerkraftrichtung. Hierdurch wird ein Totraum unterhalb der Rückwand vermieden. Die Senkrechtstellung der Vorderwand beeinträchtigt überraschenderweise nicht wesentlich den durch die Neigung der Rückwand bewirkten Effekt.

Vorzugsweise weist die Vorderwand des Stauwehrs jedoch mindestens einen Flächenabschnitt zur Kontaktierung des Schüttguts auf, der in Längsrichtung der Förderrinne oder des Förderrohrs angewinkelt ist, um die Überwindung des Stauwehrs weiter zu begünstigen. Insbesondere kann dieser Flächenabschnitt in Längsrichtung der Förderrinne oder des Förderrohrs vom Boden der Förderrinne oder des Förderrohrs zum Scheitel des Stauwehrs ansteigend angewinkelt sein.

Eine solche ansteigende Anwinkelung kann beispielsweise dadurch realisiert werden, dass die Vorderwand des Stauwehrs mindestens einen Flächenabschnitt zur Kontaktierung des Schüttguts aufweist, der konkav gewölbt ist und/oder ein oder mehrere Sicken quer zur Längsrichtung und Vertikalrichtung aufweist. Durch die Verwölbung und/oder Sicken kann eine zusätzliche Versteifung gegen das anlaufende Schüttgut erzielt werden.

Gemäß einer weiteren besonderen Ausführungsart können an der Vorderwand senkrechte und geneigte Flächenabschnitte miteinander kombiniert werden. dass die Vorderwand des Stauwehrs einen ersten Flächenabschnitt zur Kontaktierung des Schüttguts aufweist, der an den Boden der Förderrinne oder des Förderrohrs anschließt und senkrecht zum Boden der Förderrinne oder des Förderrohrs und/oder in Schwerkraftrichtung verläuft, sowie einen zweiten Flächenabschnitt zur Kontaktierung des Schüttguts, der in Richtung des Scheitels des Stauwehrs an den ersten Flächenabschnitt anschließt und konkav gewölbt ist und/oder ein oder mehrere Sicken quer zur Längsrichtung und Vertikalrichtung aufweist.

Das Verhältnis der Höhe des senkrechten ersten Flächenabschnitts zur Gesamthöhe des Stauwehrs vom Boden bis zum Scheitel beträgt vorzugsweise 0,05 bis 0,25.

Die Anzahl der Stauwehre in der Förderrinne oder dem Förderrohr kann je nach Bedarf gewählt werden. Vorzugsweise beträgt diese Anzahl drei oder mehr. Im besten Fall ergibt sich im Raum zwischen den Stauwehren und durch deren Gestaltung ein "idealer Rührkessel".

Die einzelnen Stauwehre können lösbar in der Förderrinne oder dem Förderrohr befestigt sein, so dass der Vibrationsförderer wahlweise für Zwecke mit und ohne Stauwehre eingesetzt werden kann. Zudem kann hierdurch bei Bedarf die Anzahl der Stauwehre erhöht oder vermindert werden bzw. deren Abstand untereinander verändert werden, um das Durchströmverhalten des Schüttguts durch die Förderrinne oder das Förderrohr einstellen zu können.

Es ist jedoch auch möglich, das Stauwehr bzw. die Stauwehre mit der Förderrinne oder dem Förderrohr zu verschweißen.

Gemäß einer weiteren besonderen Ausführungsart sind die Vorderwand und die Rückwand des Stauwehrs am Scheitel des Stauwehrs miteinander verbunden.

Gegebenenfalls kann der Scheitel zur Versteifung des Stauwehrs durch einen im Wesentlichen horizontalen Steg gebildet werden, der in etwa parallel zu einer Ebene ist, welche durch die Längs- und Querrichtung der Förderrinne oder des Förderrohrs aufgespannt wird. Die Stegweite liegt vorzugsweise im Bereich von 2 bis 40 mm.

Gemäß einer weiteren besonderen Ausführungsart weist das Stauwehr sich über seinen Scheitel in Vertikalrichtung hinaus erstreckende Seitenwände auf, welche Einrichtungen zum Einhängen des Stauwehrs in die Förderrinne oder das Förderrohr aufweisen.

Hierdurch können Stauwehre sehr flexibel in der Förderrinne oder dem Förderrohr platziert werden.

Vorzugsweise ist das Stauwehr in Blechkonstruktion ausgeführt. Dabei können die Rückwand und die Vorderwand als Blechformteile ausgebildet sein. Insbesondere können die Rückwand und die Vorderwand aus einem einstückigen Blechelement umformtechnisch hergestellt sein.

Der vorstehend erläuterte Vibrationsförderer kann für Wurfwinkel im Bereich von 15 bis 70° eingesetzt werden, wobei der Wurfwinkel der Anstellwinkel der Richtung der gerichteten Schwingungserregung zu der Längsrichtung der Förderrinne oder des Förderrohrs ist.

Das Fördern des Schüttguts in Längsrichtung durch die Förderrinne oder das Förderrohrs resultiert vorzugsweise aus einer Kombination von Schwingungserregung und Nachschub von Schüttgut in die Förderrinne oder das Förderrohr. Hierdurch sind insbesondere auch sehr steile Wurfwinkel möglich, welche hohe Verweilzeiten begünstigen.

Die Einkopplung der Schwingungserregung in die Förderrinne oder das Förderrohr kann grundsätzlich auf beliebige Art und Weise erfolgen. Gemäß einer besonderen Ausführungsart umfasst der Vibrationsgenerator mindestens einen an der Förderrinne oder dem Förderrohr befestigten elektromagnetischen Vibrationsantrieb oder mindestens zwei eine gerichtete Schwingrichtung erzielende Vibrationsmotoren in Form von Unwuchtmotoren. Durch den direkten Anschluss des elektromagnetischen Vibrationsantriebs oder der Vibrationsmotoren an der Förderrinne oder dem Förderrohr ergibt sich zum einen eine kompakte Ausführung. Zum anderen werden Kopplungseinrichtungen zu einem externen Antrieb vermieden. Dies ist insbesondere für Anwendungen relevant, bei welchen hohe Anforderungen an Sauberkeit und Hygiene bestehen.

Nachfolgend wird die Erfindung anhand von in der Zeichnung dargestellten Ausführungsbeispielen näher erläutert. Die Zeichnung zeigt in:
- Fig. 1: eine räumliche Ansicht eines ersten Ausführungsbeispiels eines Vibrationsförderers nach der Erfindung,
- Fig. 2: eine Längsschnittansicht durch ein Stauwehr des Vibrationsförderers gemäß Fig. 1,
- Fig. 3: eine Längsschnittansicht durch eine erste Variante des Stauwehrs,
- Fig. 4: eine Längsschnittansicht durch eine zweite Variante des Stauwehrs,
- Fig. 5: eine Längsschnittansicht durch eine dritte Variante des Stauwehrs,
- Fig. 6: eine Längsschnittansicht durch eine vierte Variante des Stauwehrs,
- Fig. 7: eine Längsschnittansicht durch eine fünfte Variante des Stauwehrs,
- Fig. 8: eine räumliche Ansicht eines Ausführungsbeispiels eines einhängbaren Stauwehrs nach der Erfindung
- Fig. 9: eine Längsschnittansicht durch eine sechste Variante des Stauwehrs,
- Fig. 10: eine Längsschnittansicht durch eine siebte Variante des Stauwehrs,
- Fig. 11: eine Längsschnittansicht durch eine achte Variante des Stauwehrs, und in
- Fig. 12: eine Ansicht von oben auf einen Vibrationsförderer nach einer weiteren Ausführungsvariante der Erfindung.

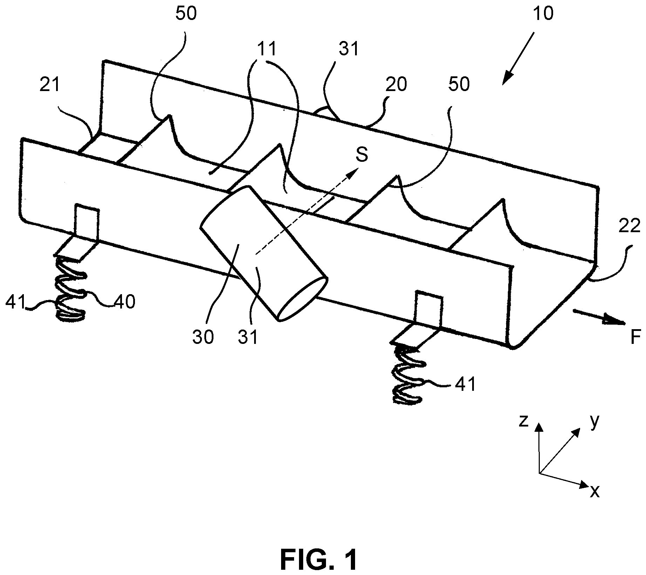

Das Ausführungsbeispiel in Fig. 1 zeigt einen Vibrationsförderer 10 für Schüttgut.

Der Vibrationsförderer 10 umfasst eine Förderrinne 20 zur Aufnahme von Schüttgut und weist einen wannenförmigen Querschnitt auf. Die Förderrinne 20 ist an einer Längsseite nach oben offen. Es ist jedoch auch möglich, anstatt einer Förderrinne 20 ein Förderrohr zu verwenden.

Mit der Förderrinne 2 ist mindestens ein Vibrationsgenerator 30 wirkverbunden. Dieser ist derart konfiguriert, um eine gerichtete Schwingungserregung S zum Fördern des Schüttguts in Längsrichtung x durch die Förderrinne 20 zu erzeugen.

Die gerichtete Schwingungserregung S weist vorliegend Richtungskomponenten in Längsrichtung x der Förderrinne 20 sowie vertikal entgegen der Schwerkraftrichtung z auf.

Hierdurch werden die Partikel des Schüttguts nach dem Mikrowurfprinzip in Förderrichtung F durch die Förderrinne 20 transportiert, wie dies eingangs bereits erläutert wurde. Die einzelnen Partikel werden nach ihrem Einbringen in die Förderrinne an deren Zufuhrende 21 wiederholt in Richtung S schräg nach oben zur Längsrichtung x der Förderrinne 20 beschleunigt und fallen danach wieder herab. Dies wiederholt sich fortlaufend bis die Partikel schließlich das Auslassende 22 der Förderrinne 20 erreichen. Der Wurfwinkel α zwischen der Richtung S der gerichteten Schwingungserregung und der Längsrichtung x im Bereich liegt vorzugsweise im Bereich von 15 bis 70°. Der Vorschub des Schüttguts in der Förderrinne 20 kann durch Nachschub von Schüttgut in die Förderrinne 20 unterstützt werden. Die Förderbewegung resultiert dann aus einer Kombination von Schwingungserregung und Nachschub von Schüttgut.

In dem dargestellten Ausführungsbeispiel wird der Vibrationsgenerator 30 durch zwei an der Förderrinne 20 befestigte Vibrationsmotoren 31 gebildet. Jedoch können auch mehr als zwei Vibrationsmotoren 31 an der Förderrinne 20 angeordnet sein. Zudem ist es möglich, eine Schwingungserregung mittels eines elektromagnetischen Antriebs zu erzeugen. Die Schwingungserregung kann ferner auch mittels eines separaten Antriebs erzeugt und über ein Getriebe an die Förderrinne 20 übertragen werden.

Zur Ermöglichung eines entsprechenden Freiheitsgrads für die Schwingungsbewegung ist die Förderrinne 20 über eine Federeinrichtung 40, beispielsweise in Form von mehreren Schraubenfedern 41 gegen den Untergrund abgestützt. Die in Fig. 1 dargestellte elastische Abstützung ist jedoch lediglich beispielhafter Natur und kann auch auf andere Weise verwirklicht werden.

Zur Verminderung der Fördergeschwindigkeit in Förderrichtung F ist in der Förderrinne 20 mindestens ein Stauwehr 50 angeordnet. Üblicherweise sind in der Förderrinne 20 mehrere Stauwehre 50 in Förderrichtung F hintereinanderliegend angeordnet. Vorzugsweise werden drei oder mehr Stauwehre 50 vorgesehen, welche die Förderbewegung des Schüttguts in Längsrichtung x durch die Förderrinne 20 abbremsen.

Die einzelnen Stauwehre 50 können lösbar in der Förderrinne 20 befestigt sein. Hierdurch kann der Vibrationsförderer 10 wahlweise für Zwecke mit und ohne Stauwehre 50 eingesetzt werden kann. Zudem kann hierdurch bei Bedarf die Anzahl der Stauwehre 50 in dem Vibrationsförderer 10 sowie der Abstand zwischen diesen verändert werden. Hierdurch kann der Vibrationsförderer 10 flexible an die jeweiligen Erfordernisse angepasst werden. Es ist jedoch auch möglich, die Stauwehre 50 mit der Förderrinne 20 zu verschweißen.

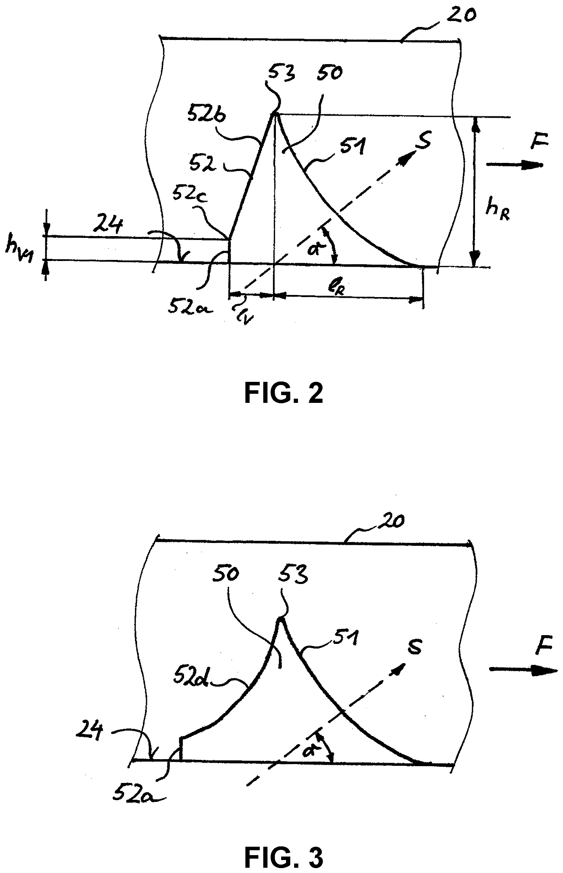

Um eine möglichst homogene Verweilzeit für das Schüttgut zu realisieren sowie um Blockaden und Klumpenbildung im Schüttgut zu vermeiden, sind diese Stauwehre 50 in besonderer Art und Weise ausgebildet. Dies soll nachfolgend anhand der Fig. 2 bis 5 näher erläutert werden.

Jedes Stauwehr 50 besitzt eine in Förderrichtung F des Schüttguts weisende Rückwand 51 sowie eine entgegen der Förderrichtung F weisende Vorderwand 52. Die Rückwand 51 und die Vorderwand 52 sind an einem Scheitel 53 zusammengeführt und vorzugsweise miteinander verbunden.

Das Stauerwehr 50 erstreckt sich vom Boden 24 der Förderrinne 20 nach oben und nimmt vorzugsweise die gesamte Breite der Förderrinne 20 in deren Querrichtung y ein. Um vom Zufuhrende 21 zum Auslassende 22 zu gelangen, muss ein Schüttgutpartikel somit die Scheitel 53 sämtlicher Stauwehre 50 in der Förderrinne 20 überwinden.

Erfindungsgemäß ist vorgesehen, dass die Rückwand 51 des Stauwehrs 50 in Längsrichtung x der Förderrinne 20 vom Scheitel 53 des Stauwehrs 50 zum Boden 24 der Förderrinne 20 hin zumindest abschnittsweise schräg abfallend geneigt ist, wie dies den Fig. 1 bis 5 entnommen werden kann.

Bei dem in Fig. 1 und 2 dargestellten Ausführungsbeispiel weist die Rückwand 51 mindestens einen konkav gewölbten Flächenabschnitt zur Kontaktierung des Schüttguts auf, welcher bei einer gerichteten Schwingungserregung in Richtung S wie eine Schaufel auf das Schüttgut wirkt. Es hat sich gezeigt, dass sich durch diese Schaufelwirkung Verdichtungseffekte im Schüttgut weitestgehend vermeiden lassen. Zudem wird das Schüttgut bei größeren Verweilzeiten von bis zu etwa 30 min hinreichend in Förderrichtung F weitertransportiert. Insgesamt ergibt sich hierdurch für die Schüttgutpartikel ein Verweilzeitspektrum mit geringer Streuung, was sich wiederum günstig auf die Qualität des Schüttguts auswirkt.

Aufgrund der im Vergleich zu einer reinen Förderrinne sehr deutlich erhöhten Verweilzeit des Schüttguts in dem erfindungsgemäßen Vibrationsförderer 10 kann dieser für dezidierte Be- und Verarbeitungsprozesses des Schüttguts eingesetzt werden. Die einzelnen Abteile 11, welche durch die aufeinanderfolgenden Stauwehre 50 voneinander getrennt sind, können dabei als aufeinanderfolgende Rührkessel betrachtet werden.

Vorzugsweise ist die Rückwand 51 derart dimensioniert, dass das Verhältnis der Länge l_{R} der Rückwand 51 gemessen in Längsrichtung x der Förderrinne 20 vom Scheitel 53 des Stauwehrs bis zum Auslauf am Boden 24 der Förderrinne 20 zur Höhe h_{R} der Rückwand 51 gemessen in Vertikalrichtung z der Förderrinne 20 oder des Förderrohrs vom Boden 24 der Förderrinne 20 bis zum Scheitel 53 des Stauwehrs 50 im Bereich von 0,5 bis 2,0 liegt.

Insbesondere kann die Länge l_{R} der Rückwand 51 kleiner ist als die Höhe h_{R} der Rückwand 51 gewählt werden.

Es sind jedoch auch Ausführungen möglich, bei welchen die Länge l_{R} der Rückwand 51 größer ist als die Höhe h_{R} der Rückwand 51.

Bei dem in Fig. 1 und 2 dargestellten Ausführungsbeispiel ist die Vorderwand 52 des Stauwehrs 50 ebenfalls in Längsrichtung x geneigt.

Wie insbesondere Fig. 2 entnommen werden kann, weist vorliegend die Vorderwand 52 einen ersten Flächenabschnitt 52a zur Kontaktierung des Schüttguts auf, der an den Boden 24 der Förderrinne 20 anschließt und senkrecht zum Boden 24 der Förderrinne 20 und/oder in Schwerkraftrichtung z verläuft. Bei einer Neigung der Längsrichtung der Förderrinne 20 zur Horizontalen können die Senkrechte zum Boden 24 und die Schwerkraftrichtung z etwas auseinanderfallen.

Die Vorderwand 52 in Fig. 2 weist ferner einen zweiten Flächenabschnitt 52b zur Kontaktierung des Schüttguts auf, der in Richtung des Scheitels 53 des Stauwehrs 50 an den ersten Flächenabschnitt 52a anschließt und vorliegend als schräge Ebene ausgebildet ist. Diese Anwinkelung begünstigt ein Überwinden des Stauwehrs 50 durch das Schüttgut.

Im Bereich des Anschlusses an den ersten Flächenabschnitt 52a entsteht eine die Steifigkeit der Vorderwand 52 erhöhende Sicke 52c. Dies ist im Hinblick auf die Masse des gegen das Stauwehr 50 anlaufenden Schüttguts ebenfalls von Vorteil.

Das Verhältnis der Höhe h_{V1} des ersten Flächenabschnitts 52a zur Gesamthöhe h des Stauwehrs 50 vom Boden 24 bis zum Scheitel 53 liegt vorzugsweise im Bereich von 0,05 bis 0,25.

Von der in Fig. 2 gezeigten Ausgestaltung des Stauwehrs 50 sind zahlreiche Abwandlungen möglich.

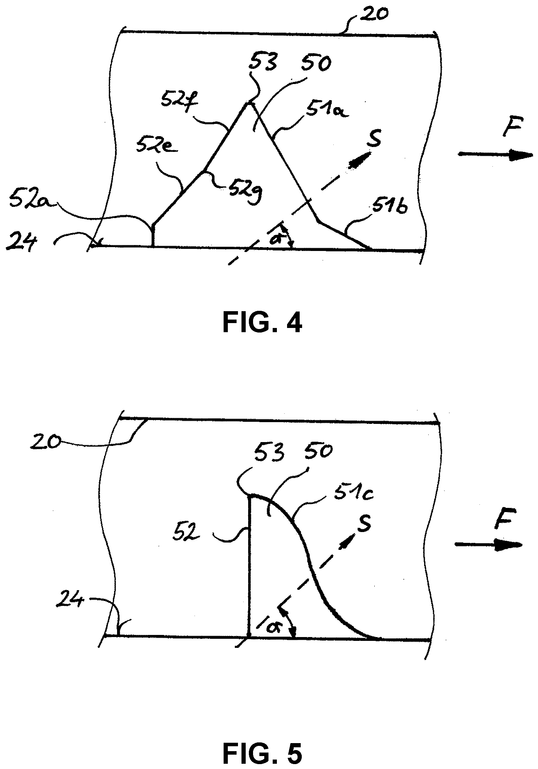

So kann in weiteren Ausführungsvarianten die Rückwand 51 einen oder mehrere ebene Flächenabschnitte 51a und 51b mit gegebenenfalls unterschiedlicher Neigung aufweisen, wie dies in Fig. 4 dargestellt ist.

Ferner kann die Rückwand 51, wie in Fig. 5, gezeigt einen konvex gewölbten Flächenabschnitt 51c zur Kontaktierung des Schüttguts aufweisen, an den vorliegend rein beispielhaft ein konkaver Abschnitt anschließt.

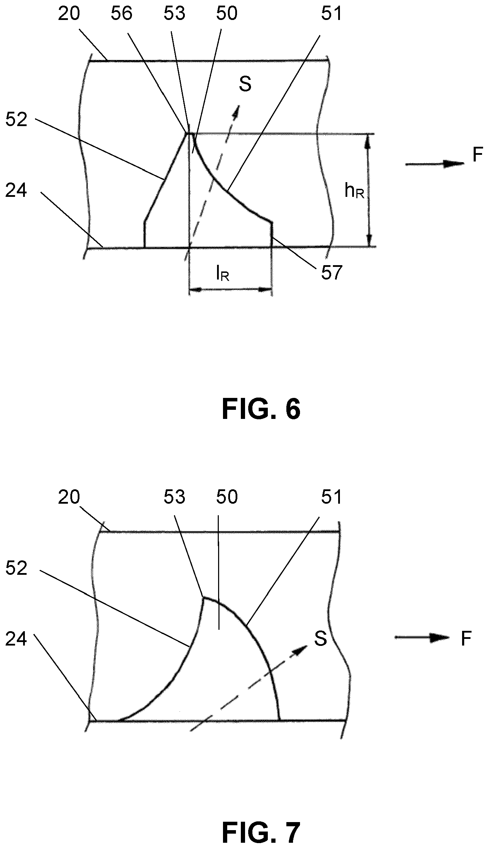

Fig. 6 veranschaulicht für die Rückwand 52 die Einbeziehung eines senkrechten Flächenanschnitts 57, d.h. eines Flächenabschnitts ohne Neigung, in Kombination mit einem abfallend geneigten, hier beispielhaft konkaven Flächenabschnitt. Anstelle des konkaven Flächenabschnitts sind jedoch auch andere Formgestaltungen der Neigung wie vorstehend anhand der weiterer Ausführungsvarianten bereits erläutert, möglich. Der senkrechte Flächenabschnitt schließt an den Boden 24 der Förderrinne 20 an, kann jedoch auch im Anschluss an den Scheitel 53 oder zwischen zwei geneigten Abschnitten platziert sein.

Unterschiedlich ausgebildete konkave, ebene und konvexe Flächenabschnitte können miteinander kombiniert werden, solange hieraus eine in Förderrichtung F grundsätzlich abfallende Neigung der Rückwand 51 resultiert. Dabei können auch senkrechte Flächenabschnitte vorkommen. Sämtliche Permutationen gelten als hiermit offenbart und beansprucht.

Wie in Fig. 7 angedeutet, beinhaltet dies ausdrücklich die Möglichkeit einer durchgängig geneigten Rückwand 51 vom Scheitel 53 bis zum Boden 24. In Fig. 7 ist dies durch eine konvexe Ausgestaltung veranschaulicht. Gleichermaßen kann jedoch auch eine durchgängig konkave oder schräge ebene Fläche zum Einsatz kommen.

Für die Vorderwand 52 kann ebenfalls eine von Fig. 2 abweichende Ausgestaltung vorgesehen sein.

Bei der ersten Ausführungsvariante in Fig. 3 ist der zweite Flächenabschnitt 52d im Unterschied zu Fig. 2 konkav ausgebildet.

Weiterhin ist es möglich, den ebenen zweiten Flächenabschnitt 52b aus Fig. 2 durch zwei unterschiedlich steil angestellte ebene Flächenabschnitte 52e, 52f zu ersetzen, wie dies in Fig. 4 beispielhaft gezeigt ist.

Prinzipiell können auch konkave Flächenabschnitte an der Vorderwand 52 vorgesehen sein.

Wie für die Rückwand 51 ist auch für die Vorderwand 52 eine Kombination aus verschiedenen ebenen, konkaven und/oder konvexen Flächenabschnitten möglich. Dies beinhaltet für die Vorderwand 52 wiederum auch die Möglichkeit einer durchgängig ebenen, konkaven und konvexen Ausgestaltung vom Scheitel 53 bis zum Boden 24 wie in Fig. 7.

Durch Bildung von Sicken 52g zwischen verschieden ausgebildeten Flächenabschnitten kann an der Vorderwand 52 ein Versteifungseffekt gegen das anlaufende Schüttgut erzielt werden.

Fig. 5 zeigt weiterhin die Möglichkeit, das Stauwehr 50 entgegen der Förderrichtung F durch eine Vorderwand 52 senkrecht zum Boden 4 der Förderrinne 20 und/oder in Schwerkraftrichtung z abzuschließen. Der oben erwähnte Schaufeleffekt wird hierdurch nicht beeinträchtigt.

Die vorgestellten Rückwand- und Vorderwandkonfigurationen können beliebig miteinander kombiniert werden.

Die Länge l_{V} der Vorderwand 52 gemessen in Längsrichtung x der Förderrinne 20 vom Auslauf am Boden 24 der Förderrinne 20 bis zum Scheitel 53 des Stauwehrs 50 ist kleiner bemessen als die Länge l_{R} der Rückwand 51 gemessen in Längsrichtung x der Förderrinne 20 vom Scheitel 53 des Stauwehrs 50 bis zum Auslauf am Boden 24 der Förderrinne 20.

Der Scheitel 53 des Stauwehrs 50 kann durch einen schmalen horizontalen Steg 56 gebildet sein, der die Rückwand 51 und die Vorderwand 52 miteinander verbindet und das Stauwehr 50 zusätzlich versteift. Ein solcher Steg 56 kann bei allen oben erläuterten Stauwehrgeometrien optional zum Einsatz kommen. Für die obigen Bemessungsabgaben wird auf die Mitte des Stegs 56 abgestellt.

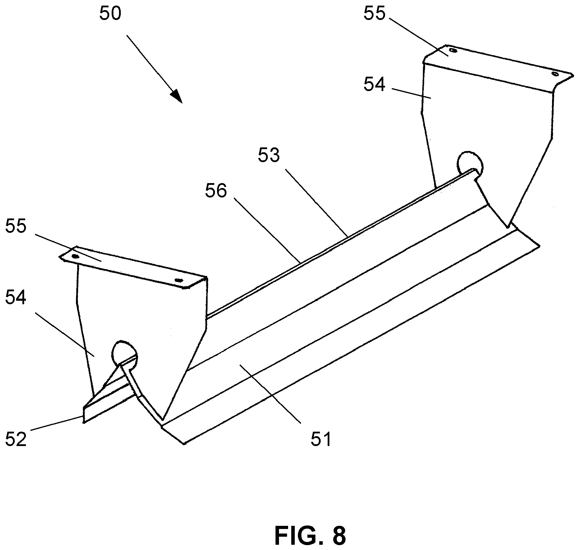

Fig. 8 zeigt beispielhaft ein Stauwehr 50, das in eine Förderrinne 20 eingehängt werden kann. Die Rückwand 51 und die Vorderwand 52 sind als Blechformteile ausgeführt und im Bereich des Scheitels 53 miteinander verbunden. Sofern ein horizontaler Steg 56 vorgesehen werden soll, kann dieser durch Abkantung an die Rück- oder Vorderwand angeformt sein. Es ist auch möglich, Rück- und Vorderwand, beispielsweise durch Abkanten, aus einem einzigen Blechelement herzustellen.

An den Endbereichen des Stauwehrs 50 in Querrichtung y ist jeweils eine Seitenwand 54 befestigt, insbesondere angeschweißt, welche Einrichtungen zum Einhängen in die Förderrinne 20 aufweist. Hierzu können die oberen Endabschnitte 55 der Seitenwände 54 nach außen umgebogen sein, so dass sich diese auf einem Rand der Förderrinne 20 abstützen können. Die Befestigung am Förderrinnenrand kann mittels Schrauben, Klemmen, durch Schweißen oder anderweitig vorgenommen sein.

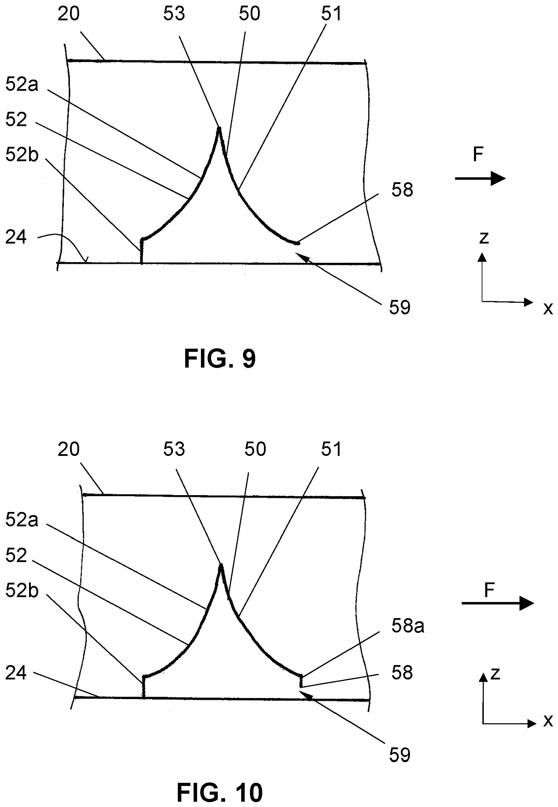

In den Fig. 9 bis 11 sind weitere Ausführungsvarianten des Stauwehrs 50 gezeigt. Bei den oben erläuterten Ausführungsvarianten schließt der bodenseitige Auslauf der Rückwand 51 jeweils an den Boden 24 der Förderrinne 20 an. Insbesondere kann sich dort der Auslauf der Rückwand 51 an den Boden 24 anschmiegen und/oder diesen berühren. Insbesondere kann die Rückwand 51 mit einer Endkante auf dem Boden 24 der Förderrinne 20 abgestützt sein.

Bei den in den Fig. 9 bis 11 gezeigten Ausführungsvarianten ist dies hingegen nicht der Fall. Gleichwohl ist auch dort die Rückwand 51 in Längsrichtung der Förderrinne 20 oder gegebenenfalls auch eines Förderrohrs von einem Scheitel 53 des Stauwehrs 50 in Richtung zum Boden 24 der Förderrinne 20 oder des Förderrohrs hin zumindest abschnittsweise schräg abfallend geneigt, um einen Schaufel- oder Wurfeffekt zu erzielen.

Zwischen einer in Förderrichtung F gelegenen Endkante 58 des Stauwehrs 50 und dem Boden 24 der Förderrinne 20 befindet sich vorliegend dementsprechend ein Spalt 59. Die Endkante 58 berührt den Boden 24 nicht, sondern ist von diesem in Vertikalrichtung z etwas beabstandet. Hierdurch werden mechanische Überbestimmtheiten bei der Abstützung des Stauwehrs 50 in der Förderrinne 20 oder dem Förderrohr vermieden. Vorzugsweise bleibt die Höhe des Spalts 59 auf maximal etwa ein Drittel der Höhe des h Stauwehrs 50 beschränkt. Mit anderen Worten, die Rückwand 51 muss nicht grundsätzlich mit dem Boden 24 abschließen, weil die Partikel des Schüttguts am Boden 24 durch Schwingungserregung über den Boden 24 ohnehin von der Rückwand 51 weg gefördert werden, so dass der Spalt 59 nicht von Nachteil ist, sondern vor allen die mechanische Überbestimmtheit der Auflage reduziert.

Fig. 10 zeigt die Möglichkeit, die Endkante 58 als Unterkante eines im Wesentlichen vertikalen Flächenabschnitts 58a vorzusehen. Hierdurch wird im Bereich der Endkante 58 eine Leiste gebildet, die eine zusätzliche Versteifung der Rückwand 51 bewirkt. Der Flächenabschnitt 58a bzw. die Leiste kann entweder vertikal in Schwerkraftrichtung z und Querrichtung y verlaufend angeordnet sein, jedoch gegebenenfalls auch etwas zur Schwerkraftrichtung z geneigt sein.

Der Verlauf der Rückwand 51 wie auch der Vorderwand 52 kann im Übrigen wie oben bereits erläutert ausgeführt sein.

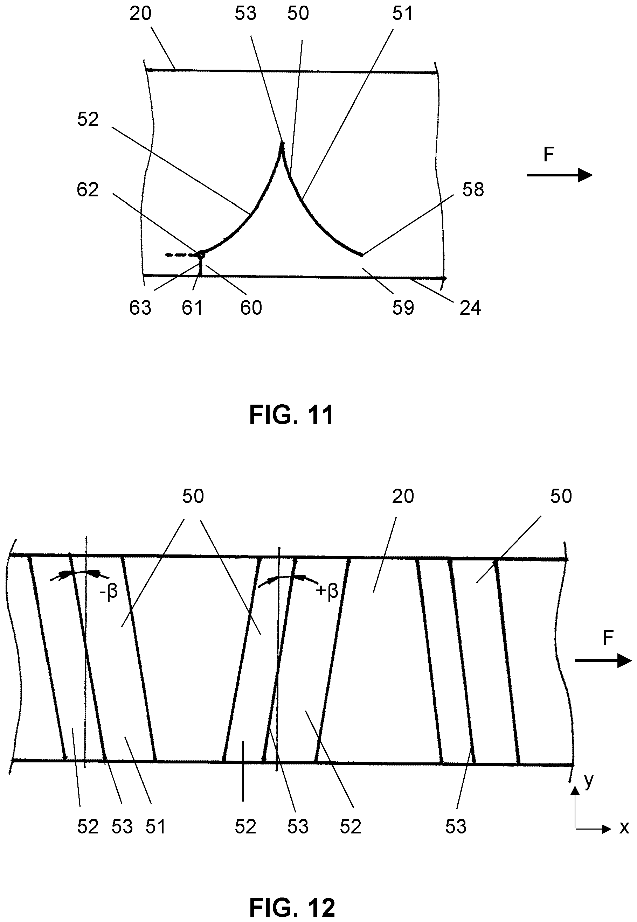

Mit dem Spalt 59 korrespondierend kann, wie in Fig. 11 gezeigt, an der Vorderwand 52 jedoch auch eine Öffnung 60 vorgesehen sein, welche verschließbar ist. Diese Öffnung 60 ist vorzugsweise in Bodennähe der Vorderwand 52 angeordnet. Insbesondere kann der Öffnungsquerschnitt der Öffnung 60 unmittelbar an den Boden 24 der Förderrinne oder des Förderrohrs anschließen. Über diese Öffnung 60 kann in Zusammenwirkung mit dem Spalt 59 die Förderinne 20 bei Bedarf, z.B. zu Reinigungszwecken oder für einen Produktwechsel, vollständig geleert werden. Schüttgutreste müssen in diesem Fall nicht die Scheitel 53 der Stauwehre 50 überwinden, sondern können entlang des Bodens 24 ausgeschlichen werden. Für das vollständige Entleeren werden in diesem Fall keine zusätzlichen Absaugeinrichtungen benötigt.

Als Verschluss 61 kann eine einfache Platte, ein Schieber oder, wie im Fig. 12 beispielhaft dargestellt, eine schwenkbar mittels eines Gelenks 62 an die Vorderwand 52 oder anderweitig angelenkte Klappe 63 vorgesehen sein. Auch andere Mittel zum Verschließen einer Öffnung können verwendet werden.

Die Klappe 63 kann die Öffnung 60 beispielsweise in Vertikalstellung verschließen und in einer hochgeschwenkten Stellung freigeben. Ein Hochschwenken kann in oder entgegen der Förderrichtung F vorgesehen sein.

Bei dem Ausführungsbeispiel gemäß Fig. 1 sind die Stauwehre 50 mit ihren Scheiteln 53 in Querrichtung y verlaufend angeordnet, wobei in Fig. 1 die Scheitel 53 parallel zueinander liegen. In Abwandlung hiervon ist es jedoch möglich, die Scheitel 53 schräg zur Querrichtung y anzuordnen. Dabei können alle Stauerwehre 50 in gleicher Richtung schräg gestellt werden. Es ist jedoch auch möglich, die Stauwehre 50 derart anzuordnen, dass deren Scheitel 53 abwechselnd oder auch in einem anderen Muster mit positiven und negativen Anstellwinkeln β zur Querrichtung y verlaufen. Fig. 12 zeigt lediglich beispielhaft in einer Ansicht von oben, d.h. in Vertikalrichtung z, eine abwechselnde Anordnung von positiven und negativen Anstellwinkeln β und -β, ohne dass die Erfindung auf diese Variante beschränkt wäre.

Die Anstellwinkel β können dem Betrag nach gleich sein. Es ist jedoch auch möglich, mit dem Betrag nach unterschiedlichen Anstellwinkeln β zu operieren. Vorzugsweise kommen Winkel von +/-5° bis +/-25° zum Einsatz.

Durch einen schrägen Einbau von Stauwehren 50 und insbesondere von unterschiedlich schräg gestellten Stauwehren 50 ist es möglich, ein Mäandern des Schüttgutstroms zu erzielen und damit die Verweilzeit zu beeinflussen, beispielsweise um eine höhere Verweilzeit zu realisieren.

Aufgrund der besonderen Geometrie des Stauwehrs 50 können bei dem vorstehend erläuterten Vibrationsförderer 10 Verdichtungseffekte im Schüttgut, welche Klumpenbildung oder Blockaden verursachen können, vermieden oder zumindest deutlich reduziert werden. Mit dem erfindungsgemäßen Vibrationsförderer 10 sind Verweilzeiten für die Schüttgutpartikel von bis zu etwa 30 min möglich, wobei das Spektrum der Verweilzeiten über alle Schüttgutpartikel sehr eng bleibt. Dies begünstigt eine gleichförmige Qualität der Partikel des Schüttguts.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel und die in den Figuren dargestellten Abwandlungen beschränkt, sondern umfasst alle durch die Patentansprüche definierten Ausgestaltungen.

## Patentansprüche

1. Vibrationsförderer (10) für Schüttgut, umfassend
eine Förderrinne (20) oder ein Förderrohr zur Aufnahme von Schüttgut, und mindestens einen Vibrationsgenerator (30), der mit der Förderrinne (20) oder dem Förderrohr wirkverbunden und derart konfiguriert ist, um eine gerichtete Schwingungserregung (S) zum Fördern des Schüttguts in Längsrichtung durch die Förderrinne (20) oder das Förderrohr zu erzeugen, wobei die gerichtete Schwingungserregung (S) Richtungskomponenten in Längsrichtung der Förderrinne (20) oder des Förderrohrs und vertikal entgegen der Schwerkraftrichtung aufweist, **gekennzeichnet durch**
mindestens ein in der Förderrinne (20) oder dem Förderrohr angeordnetes Stauwehr (50) zum Abbremsen der Förderbewegung des Schüttguts in Längsrichtung durch die Förderrinne (20) oder das Förderrohr,
wobei das Stauerwehr (50) eine in Förderrichtung (F) des Schüttguts weisende Rückwand (51) und eine entgegen der Förderrichtung (F) weisende Vorderwand (52) aufweist, und wobei die Rückwand (51) des Stauwehrs (50) in Längsrichtung der Förderrinne (20) oder des Förderrohrs von einem Scheitel (53) des Stauwehrs (50) in Richtung zum Boden (24) der Förderrinne (20) oder des Förderrohrs hin zumindest abschnittsweise schräg abfallend geneigt ist, und
wobei die Länge (l_{V}) der Vorderwand (52) gemessen in Längsrichtung der Förderrinne (20) oder des Förderrohrs vom Auslauf am Boden (24) der Förderrinne (20) oder des Förderrohrs bis zum Scheitel (53) des Stauwehrs (50) kleiner ist als die Länge (l_{R}) der Rückwand (51) gemessen in Längsrichtung der Förderrinne (20) oder des Förderrohrs vom Scheitel (53) des Stauwehrs (50) bis zum Auslauf am Boden (24) der Förderrinne (20) oder des Förderrohrs.

2. Vibrationsförderer (10) für Schüttgut nach Anspruch 1, **dadurch gekennzeichnet, dass** die Rückwand (51) mindestens einen ebenen schrägen (51a, 51b) und/oder konvex (51c) gewölbten und/oder konkav gewölbten Flächenabschnitt zur Kontaktierung des Schüttguts aufweist.

3. Vibrationsförderer (10) für Schüttgut nach Anspruch 1 oder 2, **dadurch gekennzeichnet, dass** die Rückwand (51) sich über die gesamte Breite der Förderrinne (20) oder des Förderrohrs erstreckt.

4. Vibrationsförderer (10) für Schüttgut nach einem der Ansprüche 1 bis 3, **dadurch gekennzeichnet, dass** das Verhältnis der Länge (l_{R}) der Rückwand (51) gemessen in Längsrichtung der Förderrinne (20) oder des Förderrohrs vom Scheitel (53) des Stauwehrs (50) bis zum Auslauf am Boden (24) der Förderrinne (20) oder des Förderrohrs zur Höhe (h_{R}) der Rückwand (51) gemessen in Vertikalrichtung der Förderrinne (20) oder des Förderrohrs vom Boden (24) der Förderrinne (20) oder des Förderrohrs bis zum Scheitel (53) des Stauwehrs (50) im Bereich von 0,5 bis 2,0 liegt.

5. Vibrationsförderer (10) für Schüttgut nach einem der Ansprüche 1 bis 4, **dadurch gekennzeichnet, dass** die Länge (l_{R}) der Rückwand (51) gemessen in Längsrichtung der Förderrinne (20) oder des Förderrohrs vom Scheitel (53) des Stauwehrs (50) bis zum Auslauf am Boden (24) der Förderrinne (20) oder des Förderrohrs kleiner ist als die Höhe (h_{R}) der Rückwand (51) gemessen in Vertikalrichtung der Förderrinne (20) oder des Förderrohrs vom Boden (24) der Förderrinne (20) oder des Förderrohrs bis zum Scheitel (53) des Stauwehrs (50).

6. Vibrationsförderer (10) für Schüttgut nach einem der Ansprüche 1 bis 5, **dadurch gekennzeichnet, dass** die Vorderwand (52) des Stauwehrs (50) mindestens einen Flächenabschnitt zur Kontaktierung des Schüttguts aufweist, der in Längsrichtung der Förderrinne (20) oder des Förderrohrs geneigt ist, insbesondere in Längsrichtung der Förderrinne (20) oder des Förderrohrs vom Boden (24) der Förderrinne (20) oder des Förderrohrs zum Scheitel (53) des Stauwehrs (50) ansteigend geneigt ist.

7. Vibrationsförderer (10) für Schüttgut nach einem der Ansprüche 1 bis 6, **dadurch gekennzeichnet, dass** die Vorderwand (52) des Stauwehrs mindestens einen Flächenabschnitt zur Kontaktierung des Schüttguts aufweist, der konkav (52) gewölbt ist und/oder ein oder mehrere Sicken (52c, 52g) quer zur Längsrichtung und Vertikalrichtung aufweist.

8. Vibrationsförderer (10) für Schüttgut nach einem der Ansprüche 1 bis 5, **dadurch gekennzeichnet, dass** die Vorderwand (52) des Stauwehrs (50) senkrecht zum Boden (24) der Förderrinne (20) oder des Förderrohrs und/oder in Schwerkraftrichtung verläuft.

9. Vibrationsförderer (10) für Schüttgut nach einem der Ansprüche 1 bis 5, **dadurch gekennzeichnet, dass** die Vorderwand (52) des Stauwehrs (50) einen ersten Flächenabschnitt (52a) zur Kontaktierung des Schüttguts aufweist, der an den Boden (24) der Förderrinne (20) oder des Förderrohrs anschließt und senkrecht zum Boden (24) der Förderrinne (20) oder des Förderrohrs und/oder in Schwerkraftrichtung verläuft, sowie einen zweiten Flächenabschnitt (52b, 52d) zur Kontaktierung des Schüttguts, der in Richtung des Scheitels (53) des Stauwehrs (50) an den ersten Flächenabschnitt (52a) anschließt und konkav gewölbt ist und/oder ein oder mehrere Sicken (52g) quer zur Längsrichtung und Vertikalrichtung aufweist, wobei optional das Verhältnis der Höhe (h_{V1}) des ersten Flächenabschnitts (52a) zur Gesamthöhe des Stauwehrs (50) vom Boden (24) bis zum Scheitel (53) 0,05 bis 0,25 beträgt.

10. Vibrationsförderer (10) für Schüttgut nach einem der Ansprüche 1 bis 9, **dadurch gekennzeichnet, dass** das Stauwehr (50) lösbar in der Förderrinne (20) oder dem Förderrohr befestigt ist.

11. Vibrationsförderer (10) für Schüttgut nach einem der Ansprüche 1 bis 10, **dadurch gekennzeichnet, dass** das Stauwehr (50) sich über seinen Scheitel (53) hinaus erstreckende Seitenwände (54) aufweist, welche Einrichtungen (55) zum Einhängen des Stauwehrs (50) in die Förderrinne (20) oder das Förderrohr aufweisen.

12. Vibrationsförderer (10) für Schüttgut nach einem der Ansprüche 1 bis 11, **dadurch gekennzeichnet, dass** die Rückwand (51) und/oder die Vorderwand (52) als Blechformteile ausgebildet sind.

13. Vibrationsförderer (10) für Schüttgut nach einem der Ansprüche 1 bis 12, **dadurch gekennzeichnet, dass** die Vorderwand (52) und die Rückwand (51) des Stauwehrs (50) am Scheitel (53) des Stauwehrs (50) durch einen im Wesentlichen horizontalen Steg (56) miteinander verbunden sind.

14. Vibrationsförderer (10) für Schüttgut nach einem der Ansprüche 1 bis 13, **dadurch gekennzeichnet,**
**dass** das Stauwehr (50) mit der Förderrinne (20) oder dem Förderrohr verschweißt ist, und/oder
**dass** die Anzahl der Stauwehre (50) in der Förderrinne (20) oder dem Förderrohr drei oder mehr beträgt, und/oder
**dass** der Wurfwinkel (α) für das Schüttgut zwischen der Richtung der gerichteten Schwingungserregung (S) und der Längsrichtung im Bereich von 15 bis 70° liegt, und/oder
das Fördern des Schüttguts aus einer Kombination von Schwingungserregung und Nachschub von Schüttgut in die Förderrinne (20) oder das Förderrohr resultiert, und/oder dass der Vibrationsgenerator (30) mindestens zwei an der Förderrinne (20) oder dem Förderrohr befestigte Vibrationsmotoren (31) oder mindesten einen an der Förderrinne (20) oder dem Förderrohr befestigten elektromagnetischen Vibrationsantriebs umfasst, und/oder
**dass** zwischen einer in Förderrichtung (F) gelegenen Endkante (58) der Rückwand (51) und dem Boden (24) der Förderrinne (20) oder dem Förderrohr ein Spalt (59) vorgesehen ist, und/oder
die Vorderwand (52) eine bodennahe Öffnung (60) zum Entleeren der Förderrinne (20) oder des Förderrohrs aufweist, sowie ein Verschluss (61) vorgesehen ist, mit welchem die Öffnung (60) verschließbar und öffenbar ist, und/oder
mindestens zwei Stauwehre (50) vorgesehen sind, deren Scheitel (53) zur Querrichtung der Förderrinne (20) oder des Förderrohrs einen unterschiedlichen Anstellwinkel (β) aufweisen.

## Claims

1. A vibratory conveyor (10) for bulk material, comprising
a conveying trough (20) or a conveying tube for accommodating bulk material, and
at least one vibration generator (30) functionally connected to the conveying trough (20) or the conveying tube and configured for generating a directed vibratory excitation (S) in order to transport the bulk material in longitudinal direction through the conveying trough (20) or the conveying tube, wherein the directed vibratory excitation (S) has directional components in the longitudinal direction of the conveying trough (20) or the conveying tube and in vertical direction opposite to a direction of gravity,
**characterized by**
at least one retaining weir (50) arranged in the conveying trough (20) or the conveying tube and configured for decelerating transport movement of the bulk material in longitudinal direction through the conveying trough (20) or the conveying tube, wherein the retaining weir (50) has a rear wall (51) pointing in transport direction (F) of the bulk material and a front wall (52) pointing opposite to the transport direction (F), and wherein the rear wall (51) of the retaining weir (50) in the longitudinal direction of the conveying trough (20) or the conveying tube is at least sectionally inclined in an obliquely descending manner from an apex (53) of the retaining weir (50) toward the bottom (24) of the conveying trough (20) or the conveying tube, and
wherein the length (lv) of the front wall (52) measured in the longitudinal direction of the conveying trough (20) or the conveying tube from the runout at bottom side to the apex (53) of the retaining weir (50) is smaller than the length (l_{R}) of the rear wall (51) measured in the longitudinal direction of the conveying trough (20) or the conveying tube from the apex (53) of the retaining weir (50) to the runout at bottom side.

2. The vibratory conveyor (10) for bulk material according to claim 1, **characterized in that** the rear wall (51) has at least one plane oblique (5 1a, 51b) and/or convexly curved (5 1c) and/or concavely curved surface section for contacting the bulk material.

3. The vibratory conveyor (10) for bulk material according to claim 1 or 2, **characterized in that** the rear wall (51) extends over the entire width of the conveying trough (20) or the conveying tube.

4. The vibratory conveyor (10) for bulk material according to one of claims 1 to 3, **characterized in that** the ratio of the length (l_{R}) of the rear wall (51) measured in the longitudinal direction of the conveying trough (20) or the conveying tube from the apex (53) of the retaining weir (50) to the runout at the bottom side (24) of the conveying trough (20) or the conveying tube to the height (h_{R}) of the rear wall (51) measured in the vertical direction of the conveying trough (20) or the conveying tube from the bottom (24) of the conveying trough (20) or the conveying tube to the apex (53) of the retaining weir (50) is in the range between 0.5 and 2.0.

5. The vibratory conveyor (10) for bulk material according to one of claims 1 to 4, **characterized in that** the length (l_{R}) of the rear wall (51) measured in the longitudinal direction of the conveying trough (20) or the conveying tube from the apex (53) of the retaining weir (50) to the runout on the bottom side (24) of the conveying trough (20) or the conveying tube is smaller than the height (h_{R}) of the rear wall (51) measured in the vertical direction of the conveying trough (20) or the conveying tube from the bottom (24) of the conveying trough (20) or the conveying tube to the apex (53) of the retaining weir (50).

6. The vibratory conveyor (10) for bulk material according to one of claims 1 to 5, **characterized in that** the front wall (52) of the retaining weir (50) has at least one surface section for contacting the bulk material, which is inclined in the longitudinal direction of the conveying trough (20) or the conveying tube, particularly inclined in an ascending manner from the bottom (24) of the conveying trough (20) or the conveying tube toward the apex (53) of the retaining weir (50) in the longitudinal direction of the conveying trough (20) or the conveying tube.

7. The vibratory conveyor (10) for bulk material according to one of claims 1 to 6, **characterized in that** the front wall (52) of the retaining weir has at least one surface section for contacting the bulk material, which is concavely curved (52) and/or has one or more beads (52c, 52g) transverse to the longitudinal direction and the vertical direction.

8. The vibratory conveyor (10) for bulk material according to one of claims 1 to 5, **characterized in that** the front wall (52) of the retaining weir (50) extends perpendicular to the bottom (24) of the conveying trough (20) or the conveying tube and/or in the direction of gravity.

9. The vibratory conveyor (10) for bulk material according to one of claims 1 to 5, **characterized in that** the front wall (52) of the retaining weir (50) has a first surface section (52a) for contacting the bulk material, which is located adjacent to the bottom (24) of the conveying trough (20) or the conveying tube and extends perpendicular to the bottom (24) of the conveying trough (20) or the conveying tube and/or in the direction of gravity, as well as a second surface section (52b, 52d) for contacting the bulk material, which is located adjacent to the first surface section (52a) in the direction of the apex (53) of the retaining weir (50) and concavely curved and/or has one or more beads (52g) transverse to the longitudinal direction and the vertical direction, wherein the ratio of the height (hvi) of the first surface section (52a) to the total height of the retaining weir (50) from the bottom (24) to the apex (53) is between 0.05 and 0.25.

10. The vibratory conveyor (10) for bulk material according to one of claims 1 to 9, **characterized in that** the retaining weir (50) is separably fastened in the conveying trough (20) or the conveying tube.

11. The vibratory conveyor (10) for bulk material according to one of claims 1 to 10, **characterized in that** the retaining weir (50) has sidewalls (54) that extend beyond its apex (53) and have means (55) for mounting the retaining weir (50) in the conveying trough (20) or the conveying tube.

12. The vibratory conveyor (10) for bulk material according to one of claims 1 to 11, **characterized in that** the rear wall (51) and/or the front wall (52) are formed sheet metal parts.

13. The vibratory conveyor (10) for bulk material according to one of claims 1 to 12, **characterized in that** the front wall (52) and the rear wall (51) of the retaining weir (50) are connected to one another on the apex (53) of the retaining weir (50) by means of an essentially horizontal web (56).

14. The vibratory conveyor (10) for bulk material according to one of claims 1 to 13, **characterized in**
**that** the retaining weir (50) is welded to the conveying trough (20) or the conveying tube and/or
**that** the number of the retaining weirs (50) in the conveying trough (20) or the conveying tube amounts to three or more and/or
**that** the angle of throw (α) for the bulk material between the direction of the directed vibratory excitation (S) and the longitudinal direction is in the range between 15 and 70° and/or
the transport of the bulk material results from a combination of the vibratory excitation and the fresh supply of bulk material into the conveying trough (20) or the conveying tube and/or
**that** the vibration generator (30) comprises at least two vibration motors (31) that are fastened on the conveying trough (20) or the conveying tube or at least one electromagnetic vibration drive that is fastened on the conveying trough (20) or the conveying tube and/or
**that** a gap (59) is provided between a terminal edge (58) of the rear wall (51) lying in the transport direction (F) and the bottom (24) of the conveying trough (20) or the conveying tube and/or
the front wall (52) has in the vicinity of the bottom an opening (60) for emptying the conveying trough (20) or the conveying tube and a closing element (61) for opening and closing the opening (60) is provided and/or
at least two retaining weirs (50) are provided, wherein the apexes (53) of said retaining weirs have a different setting angle (β) relative to the transverse direction of the conveying trough (20) or the conveying tube.

## Revendications

1. Un convoyeur vibrant (10) pour matériaux en vrac, comprenant
une auge de transport (20) ou un tube de transport pour recevoir des matériaux en vrac, et
au moins un générateur de vibrations (30) qui est relié fonctionnellement à l'auge de transport (20) ou au tube de transport et qui est conçu pour générer une excitation vibratoire dirigée (S) afin de transporter le matériau en vrac dans la direction longitudinale à travers l'auge de transport (20) ou le tube de transport, dans lequel l'excitation vibratoire dirigée (S) comporte des composantes directionnelles dans la direction longitudinale de l'auge de transport (20) ou du tube de transport et dans la direction verticale opposée à une direction de la gravité,
**caractérisé par**
au moins un déversoir de retenue (50) disposé dans l'auge de transport (20) ou le tube de transport et conçu pour ralentir le mouvement de transport des matériaux en vrac dans la direction longitudinale à travers l'auge de transport (20) ou le tube de transport,
dans lequel le déversoir de retenue (50) comporte une paroi arrière (51) orientée dans la direction de transport (F) des matériaux en vrac et une paroi avant (52) orientée à l'opposé de la direction de transport (F), et
dans lequel la paroi arrière (51) du déversoir de retenue (50) dans la direction longitudinale de l'auge de transport (20) ou du tube de transport est inclinée au moins en section de manière oblique descendante d'un sommet (53) du déversoir de retenue (50) vers le bas (24) de l'auge de transport (20) ou du tube de transport, et
dans lequel la longueur (lv) de la paroi avant (52) mesurée dans la direction longitudinale de l'auge de transport (20) ou du tube de transport depuis la sortie au niveau de la partie inférieure vers le sommet (53) du déversoir de retenue (50) est inférieure à la longueur (l_{R}) de la paroi arrière (51) mesurée dans la direction longitudinale de l'auge de transport (20) ou du tube de transport depuis le sommet (53) du déversoir de retenue (50) vers la sortie au niveau de la partie inférieure.

2. Le convoyeur vibrant (10) pour matériaux en vrac selon la revendication 1, **caractérisé en ce que** la paroi arrière (51) présente au moins une section de surface plane oblique (51a, 51b) et/ou incurvée de manière convexe (51c) et/ou incurvée de manière concave pour entrer en contact avec les matériaux en vrac.

3. Le convoyeur vibrant (10) pour matériaux en vrac selon la revendication 1 ou 2, **caractérisé en ce que** la paroi arrière (51) s'étend sur toute la largeur de l'auge de transport (20) ou du tube de transport.

4. Le convoyeur vibrant (10) pour matériaux en vrac selon l'une des revendications 1 à 3, **caractérisé en ce que** le rapport de la longueur (l_{R}) de la paroi arrière (51) mesurée dans la direction longitudinale de l'auge de transport (20) ou du tube de transport à partir du sommet (53) du déversoir de retenue (50) jusqu'à la sortie au niveau de la partie inférieure (24) de l'auge de transport (20) ou le tube de transport à la hauteur (h_{R}) de la paroi arrière (51) mesurée dans la direction verticale de l'auge de transport (20) ou le tube de transport depuis la partie inférieure (24) de l'auge de transport (20) ou le tube de transport jusqu'au sommet (53) du déversoir de retenue (50) est comprise entre 0,5 et 2,0.

5. Le convoyeur vibrant (10) pour matériaux en vrac selon l'une des revendications 1 à 4, **caractérisé en ce que** la longueur (l_{R}) de la paroi arrière (51) mesurée dans la direction longitudinale de l'auge de transport (20) ou du tube de transport à partir du sommet (53) du déversoir de retenue (50) jusqu'à la sortie sur la partie inférieure (24) de l'auge de transport (20) ou le tube de transport est plus petit que la hauteur (h_{R}) de la paroi arrière (51) mesurée dans la direction verticale de l'auge de transport (20) ou du tube de transport à partir de la partie inferieure (24) de l'auge de transport (20) ou du tube de transport jusqu'au sommet (53) du déversoir de retenue (50).

6. Le convoyeur vibrant (10) pour matériaux en vrac selon l'une des revendications 1 à 5, **caractérisé en ce que** la paroi avant (52) du déversoir de retenue (50) présente au moins une section de surface pour entrer en contact avec les matériaux en vrac, qui est inclinée dans la direction longitudinale de l'auge de transport (20) ou du tube de transport, particulièrement inclinée de manière ascendante à partir de la partie inférieure (24) de l'auge de transport (20) ou du tube de transport vers le sommet (53) du déversoir de retenue (50) dans la direction longitudinale de l'auge de transport (20) ou du tube de transport.

7. Le convoyeur vibrant (10) pour matériaux en vrac selon l'une des revendications 1 à 6, **caractérisé en ce que** la paroi avant (52) du déversoir de retenue présente au moins une section de surface pour entrer en contact avec les matériaux en vrac, qui est courbée de manière concave (52) et/ou présente une ou plusieurs billes (52c, 52g) transversales à la direction longitudinale et à la direction verticale.

8. Le convoyeur vibrant (10) pour matériaux en vrac selon l'une des revendications 1 à 5, **caractérisé en ce que** la paroi avant (52) du déversoir de retenue (50) s'étend perpendiculairement vers la partie inférieure (24) de l'auge de transport (20) ou du tube de transport et/ou dans la direction de la gravité.

9. Le convoyeur vibrant (10) pour matériaux en vrac selon l'une des revendications 1 à 5, **caractérisé en ce que** la paroi avant (52) du déversoir de retenue (50) présente une première section de surface (52a) pour entrer en contact avec les matériaux en vrac, qui est située à côté de la partie inferieure (24) de l'auge de transport (20) ou du tube de transport et s'étend perpendiculairement vers la partie inférieure (24) de l'auge de transport (20) ou du tube de transport et/ou dans le direction de gravité, ainsi qu'une deuxième section de surface (52b, 52d) pour entrer en contact avec les matériaux en vrac, qui est située à côté de la première section de surface (52a) dans la direction du sommet (53) du déversoir de retenue (50) et incurvée de manière concave et/ou présente une ou plusieurs billes (52g) transversales à la direction longitudinale et à la direction verticale, dans lequel le rapport de la hauteur (h_{V1}) de la première section de surface (52a) à la hauteur totale du déversoir de retenue (50) à partir de la partie inférieure (24) jusqu'au sommet (53) est compris entre 0,05 et 0,25.

10. Le convoyeur vibrant (10) pour matériaux en vrac selon l'une des revendications 1 à 9, **caractérisé en ce que** le déversoir de retenue (50) est fixé de manière séparable dans l'auge de transport (20) ou le tube de transport.

11. Le convoyeur vibrant (10) pour matériaux en vrac selon l'une des revendications 1 à 10, **caractérisé en ce que** le déversoir de retenue (50) présente des parois latérales (54) qui s'étendent au-delà de son sommet (53) et comportent des moyens (55) pour monter le déversoir de retenue (50) dans l'auge de transport (20) ou le tube de transport.

12. Le convoyeur vibrant (10) pour matériaux en vrac selon l'une des revendications 1 à 11, **caractérisé en ce que** la paroi arrière (51) et/ou la paroi avant (52) sont réalisées sous forme de pièces en tôle.

13. Le convoyeur vibrant (10) pour matériaux en vrac selon l'une des revendications 1 à 12, **caractérisé en ce que** la paroi avant (52) et la paroi arrière (51) du déversoir de retenue (50) sont reliées l'une à l'autre sur le sommet (53) du déversoir de retenue (50) au moyen d'une nervure essentiellement horizontale (56).

14. Le convoyeur vibrant (10) pour matériaux en vrac selon l'une des revendications 1 à 13, caractérisé en
que le déversoir de retenue (50) est soudé à l'auge de transport (20) ou au tube de transport et/ou
que le nombre de déversoirs de retenue (50) dans l'auge de transport (20) ou le tube de transport est égal ou supérieur à trois et/ou
que l'angle de projection (α) des matériaux en vrac entre la direction de l'excitation vibratoire dirigée (S) et la direction longitudinale est compris entre 15 et 70° et/ou
le transport de matériaux en vrac résulte d'une combinaison d'excitation vibratoire et d'apport frais de matériaux en vrac dans l'auge de transport (20) ou le tube de transport et/ou
que le générateur de vibrations (30) comprend au moins deux moteurs à vibration (31) qui sont fixés sur l'auge de transport (20) ou le tube de transport ou au moins un entraînement à vibrations électromagnétique est fixé sur l'auge de transport (20) ou le tube de transport et/ou
qu'un espace (59) est prévu entre un bord d'extrémité (58) de la paroi arrière (51) situé dans la direction de transport (F) et la partie inférieure (24) de l'auge de transport (20) ou du tube de transport et/ou
la paroi avant (52) comporte à proximité de la partie inférieure une ouverture (60) pour vider l'auge de transport (20) ou le tube de transport et un élément de fermeture (61) pour ouvrir et fermer l'ouverture (60) est prévu et/ou
au moins deux déversoirs de retenue (50) sont prévus, dans lesquels les sommets (53) desdits déversoirs de retenue présentent un angle de réglage différent (β) par rapport à la direction transversale de l'auge de transport (20) ou du tube de transport.
